# EUROPÄISCHE PATENTSCHRIFT

(11) **EP 2 279 652 B1**
(45) Veröffentlichungstag und Bekanntmachung des Hinweises auf die Patenterteilung: **19.09.2012**
(21) Anmeldenummer: 10170025.0
(22) Anmeldetag: 19.07.2010
(51) Int. Cl.: A01B 49/02

(54) **Grubber**
Grubber
Cultivateur

(30) Priorität: 27.07.2009 DE 202009010188 U
(43) Veröffentlichungstag der Anmeldung: 02.02.2011
(73) Patentinhaber: Treffler, Paul, 86554 Pöttmes-Echsheim (DE)
(72) Erfinder: Treffler, Paul, 86554 Pöttmes-Echsheim (DE)
(74) Vertreter: Charrier, Rapp & Liebau

(56) Entgegenhaltungen:
- FR-A- 987 717
- FR-A1- 2 568 088
- GB-A- 2 369 027
- US-A1- 2002 144 827

## Beschreibung

Die Erfindung betrifft einen Grubber nach dem Oberbegriff des Anspruchs 1.

Ein Grubber mit den Merkmalen des Oberbegriffes ist aus der US-A-20020144827 bekannt.

Derartige Grubber werden in der Landwirtschaft zum Auflockern und Umbruch von Böden, insbesondere für die flache Stoppelbearbeitung, eingesetzt. Sie weisen in der Regel einen an ein Zugfahrzeug ankoppelbaren Grundrahmen mit einem Fahrwerk, mehrere am Grundrahmen nebeneinander angeordnete Grubberzinken zum Aufbrechen des Erdreichs und mehrere den Grubberzinken nachgeordnete Nivellier- oder Zustreichzinken zum Glätten des durch die Grubberzinken aufgerissenen Erdreichs auf. Bei den bisher bekannten Grubbern sind die Nivellierzinken starr mit dem Grundrahmen verbunden und üblicherweise in einer Reihe zwischen den Grubberzinken und den hinteren Rädern angeordnet. Dabei ergibt sich allerdings die Problematik, dass sich im Bereich der zwischen einer Arbeitsstellung und einer Transportstellung verschwenkbaren hinteren Räder aus Platzgründen keine starren Nivellierzinken anordnen lassen und somit eine Zustreichlücke (Bearbeitungslücke) im Bereich der Arbeitsbreite des Grubbers entsteht. Daher wird üblicherweise durch Verlängerung des Grundrahmens zwischen den Grubberzinken und dem Fahrwerk ein zusätzlicher Platz für die Nivellierzinken geschaffen. Diese Konstruktion weist jedoch den Nachteil auf, dass sich die Gesamtlänge des Bearbeitungsgeräts wesentlich erhöht und somit die Wendigkeit, die für die Bodenbearbeitung von entscheidender Bedeutung ist, erheblich beeinträchtigt wird. Außerdem ergibt sich durch die verlängerte Bauweise eine Gewichtserhöhung, was zu Problemen bei der leichten Bodenbearbeitung führen kann und mit einer Erhöhung der Fertigungskosten und des Kraftstoffverbrauchs verbunden ist.

Aufgabe der Erfindung ist es, einen Grubber der eingangs genannten Art zu schaffen, der eine kompakte Bauweise aufweist und die vorgenannten Nachteile vermeidet.

Diese Aufgabe wird durch einen Grubber mit den Merkmalen des Anspruchs 1 gelöst. Zweckmäßige Ausgestaltungen und vorteilhafte Weiterbildungen der Erfindung sind in den Unteransprüchen angegeben.

Bei dem erfindungsgemäßen Grubber sind die im Bereich der Räder angeordneten Nivellierzinken zwischen einer abgesenkten Nivellierstellung unterhalb der in die Arbeitsstellung angehobenen Räder und einer angehobenen Transportstellung vor den abgesenkten Rädern verschwenkbar. Auf diese Weise kann die Gesamtlänge des Grubbers kurz gehalten werden, was die Wendigkeit verbessert. Durch die gut aufeinander abgestimmten Komponenten ist der Grubber besonders gut für die flache bis mitteltiefe Bodenbearbeitung geeignet. Da die Hinterachse des Zugfahrzeugs durch das geringere Gewicht nicht so stark belastet wird, kann mit sehr niedrigem Reifendruck gefahren werden, so dass der Grubber auch für die Frühjahrs-Bodenbearbeitung eingesetzt werden kann.

Die zwischen der abgesenkten Nivellierstellung und der angehobenen Transportstellung verschwenkbaren Nivellierzinken sind zweckmäßigerweise über eine Winkelstütze an einer drehbaren Querachse angeordnet. Zwischen den verschwenkbaren Nivellierzinken befinden sich auf der Höhe der Räder stationäre Nivellierzinken, die über feste Stützen an einem hinteren Querträger des Grundrahmens befestigt sind.

Die Nivellierzinken sind vorzugsweise federnd gelagert und weisen ein an einer Federplatte befestigtes unteres Nivellierteil auf. Dadurch kann eine optimale Anpassung an den Boden erfolgen.

In einer weiteren vorteilhaften Ausgestaltung ist den Nivellierzinken eine Packerwalzenanordnung mit einer vorderen Packerwalze und einer hinteren Nachlaufwalze nachgeordnet. Dadurch kann eine Rückverfestigung des Bodens erfolgen. Die Packerwalze enthält zweckmäßigerweise mehrere voneinander beabstandete Ringe, zwischen die voneinander beabstandete Scheiben der Nachlaufwalze eingreifen. Die ineinander greifenden Walzen reinigen sich gegenseitig und gewährleisten eine sehr gute Rückverfestigung und Seitenführung am Hang.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: den hinteren Teil eines Grubbers in einer Transportstellung mit abgesenkten Rädern in einer Seitenansicht;
- **Figur 2**: den hinteren Teil des Grubbers von Figur 1 in einer Arbeitsstellung mit angehobenen Rädern in einer Seitenansicht;
- **Figur 3**: den in der Transportstellung von Figur 1 befindlichen Grubber in einer perspektivischen Draufsicht;
- **Figur 4**: eine Detailansicht von Figur 3;
- **Figur 5**: den in der Arbeitsstellung von Figur 2 befindlichen Grubber in einer perspektivischen Draufsicht und
- **Figur 6**: eine Detailansicht von Figur 5.

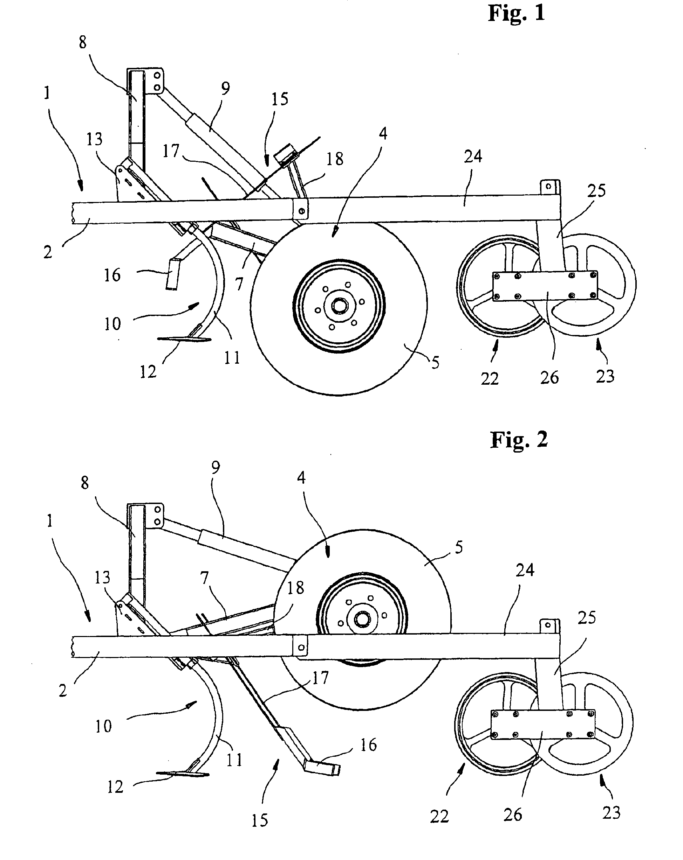

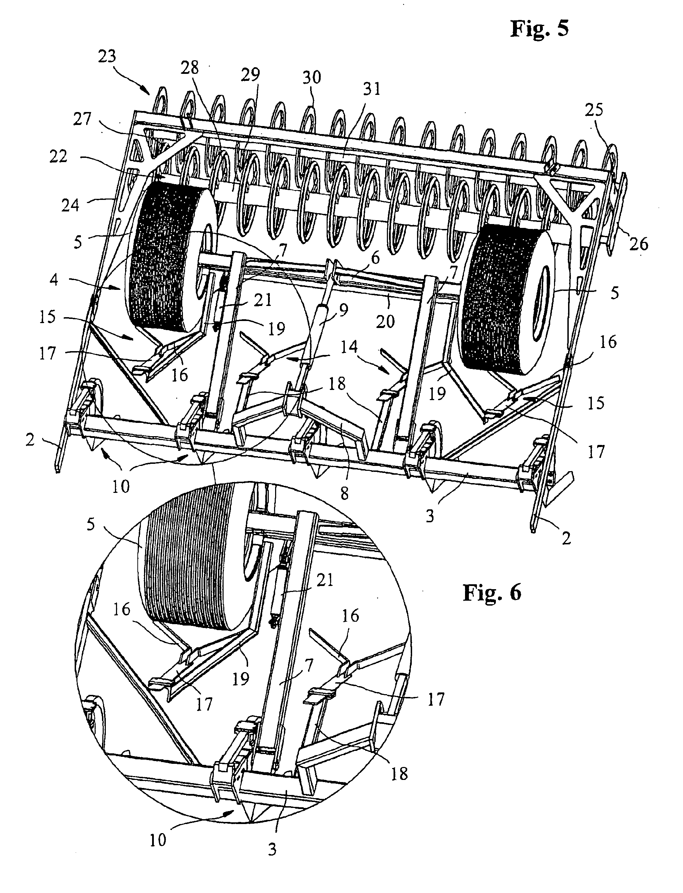

In der Zeichnung ist der hintere Teil eines für die Bodenbearbeitung und insbesondere für eine flache Stoppelbearbeitung konzipierten Grubbers in einer Transportstellung (Figuren 1, 3 und 4) und einer Arbeitsstellung (Figuren 2, 5 und 6) gezeigt. Der üblicherweise an ein Zugfahrzeug angehängte Grubber enthält einen Grundrahmen 1, der an seinem in Transportrichtung vorderen - nicht dargestellten - Ende über an sich bekannte und daher nicht gezeigte Pendelstützräder abgestützt ist. An dem hinteren Ende des aus Längs- und Querträgern 2 bzw. 3 bestehenden Grundrahmens 1 ist ein Fahrwerk 4 mit zwei anheb- und absenkbaren Rädern 5 vorgesehen.

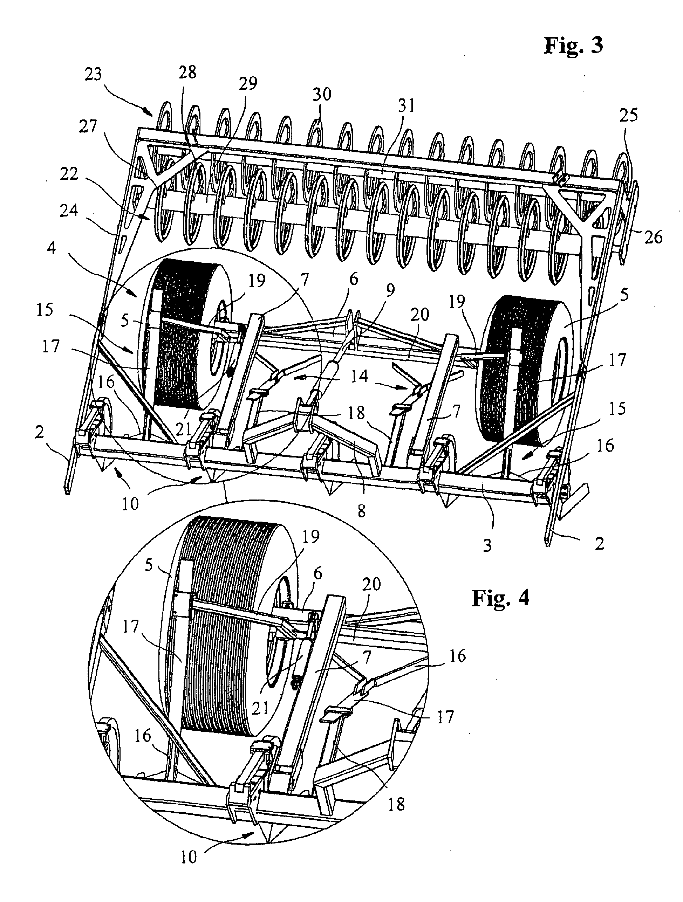

Wie aus den Figuren 2 und 4 hervorgeht, enthält das Fahrwerk 4 eine Quertraverse 6, die über zwei Längsträger 7 verschwenkbar an dem hinteren Querträger 3 des Grundrahmens 1 angelenkt ist. Über einen an der Quertraverse 6 und eine Stütze 8 am hinteren Querträger 3 des Grundrahmens 1 angelenkten ersten Druckmittelzylinder 9 ist die Quertraverse 6 verschwenkbar, um die an ihren Enden angeordneten Räder 5 zwischen einer in Figur 1 gezeigten abgesenkten Transportstellung und einer in Figur 2 dargestellten angehobenen Arbeitsstellung zu bewegen.

An den Querträgern 3 des Grundrahmens 1 sind mehrere seitlich voneinander beabstandete Grubberzinken 10 zum Aufreißen des Erdreichs befestigt. Die Grubberzinken 10 sind an dem Grundrahmen 1 üblicherweise in mehreren Reihen zueinander seitlich versetzt angeordnet, um einen engen Strichabstand zu gewährleisten. Die Grubberzinken 10 weisen ein am unteren Ende eines gebogenen Grubberstiels 11 befestigtes Scharblatt 12 auf und sind mit dem oberen Ende des Gruberstiels 12 über eine Halterung 13 federnd an dem hinteren Querträger angelenkt.

In Transportrichtung hinter den Grubberzinken 10 sind in Figur 3 und 4 erkennbare stationäre Nivellierzinken 14 und verschwenkbare Nivellierzinken 15 zum Glätten des durch die Grubberzinken 10 aufgerissenen Erdreichs vorgesehen. Sowohl die stationären als auch die verschwenkbaren Nivellierzinken 14 und 15 enthalten ein unteres winkelförmiges Nivellierteil 16, das an einer Federplatte 17 befestigt ist. Die festen Nivellierzinken 14 sind zwischen den Rädern 5 angeordnet und über eine Stütze 18 an dem hinteren Querträger befestigt. Die verschwenkbaren Nivellierzinken 15 sind über eine Winkelstütze 19 an einer parallel zur Quertraverse 6 verlaufenden, drehbaren Querachse 20 angebracht. Die Querachse ist über einen zweiten Druckmittelzylinder 21 derart drehbar, dass die beiden im Bereich der Räder 5 angeordneten Nivellierzinken 15 zwischen einer in den Figuren 1 und 3 gezeigten angehobenen Transportstellung vor den abgesenkten Rädern 5 und einer in den Figuren 2 und 4 gezeigten Nivellierstellung unterhalb der angehobenen Räder 5 verschwenkt werden können. Die Ansteuerung der beiden Druckmittelzylinder und 21 erfolgt dabei so, dass beim Anheben der Räder 5, die zunächst vor den Rädern 5 befindlichen verschwenkbaren Nivellierzinken 15 unter die Räder 5 verschwenkt werden.

Für eine anschließende Rückverfestigung des Bodens kann an dem Grundrahmen 1 eine den Grubberzinken 10 und den Nivellierzinken 14 und 15 nachgeordnete Packerwalzenanordnung mit einer in Transportrichtung vorderen Packerwalze 22 und einer in Transportrichtung hinteren Nachlaufwalze 23 befestigt werden. Die Packerwalze 22 und die Nachlaufwalze 23 sind an einem Tragrahmen 24 angeordnet, der zwei an Endstützen 25 pendelnd gelagerten Lagerplatten 26 enthält. Zwischen den am Tragrahmen 24 pendelnd gelagerten Lagerplatten 26 sind die Packerwalze 22 und die Nachlaufwalze 23 drehbar angebracht.

Die Packerwalze 22 besteht aus mehreren voneinander beabstandeten Ringen 27, die über Speichen 28 an einem vorderen Tragrohr 29 befestigt sind. Die Ringe 27 der vorderen Packerwalze 22 sind aus einem gebogenen Vierkant-Hohlprofil hergestellt, das zu einem Ring gerundet und über die Speichen 28 mit dem vorderen Tragrohr 29 verschweißt ist. Die Nachlaufwalze besteht aus mehreren voneinander beabstandeten Scheiben 30, die aus einem Stahlblech z.B. durch Laserstrahlschneiden ausgeschnitten und an einem hinteren Tragrohr 31 festgeschweißt sind. Die Packerwalze 22 und die Nachlaufwalze 23 sind derart angeordnet, dass deren Tragrohre 29 und 31 parallel zueinander verlaufen und die Scheiben 30 der Nachlaufwalze 23 zwischen die Ringe 27 der Packerwalze 22 greifen. Durch die ineinander greifenden Ringe 27 und Scheiben 30 der Packerwalze 22 bzw. Nachlaufwalzen 23 wird eine Anhaftung von Erde verhindert und dadurch ein Reinigungseffekt erzielt. Eine besonders gute Reinigungswirkung kann erreicht werden, wenn der Abstand zwischen den Ringen 27 und Scheiben 30 im Bereich von 20 mm liegt.

## Patentansprüche

1. Grubber mit einem Grundrahmen (1), einem am Grundrahmen (1) angeordneten Fahrwerk (4) mit zwei zwischen einer abgesenkten Transportstellung und einer angehobenen Arbeitsstellung bewegbaren Rädern (5), mehreren am Grundrahmen (1) nebeneinander angeordneten Grubberzinken (10) und mehreren den Grubberzinken (10) nachgeordneten Nivellierzinken (14, 15), **dadurch gekennzeichnet, dass** die im Bereich der Räder (5) angeordneten Nivellierzinken (15) zwischen einer abgesenkten Nivellierstellung unterhalb der in die Arbeitsstellung angehobenen Räder (5) und einer angehobenen Transportstellung vor den abgesenkten Rädern (5) verschwenkbar sind.

2. Grubber nach Anspruch 1, **dadurch gekennzeichnet, dass** die zwischen einer abgesenkten Nivellierstellung und einer angehobenen Transportstellung verschwenkbaren Nivellierzinken (15) über eine Winkelstütze (19) an einer drehbaren Querachse (20) angeordnet sind.

3. Gubber nach Anspruch 1 oder 2, **dadurch gekennzeichnet**, das zwischen den verschwenkbaren Nivellierzinken (15) auf der Höhe der Räder (5) stationäre Nivellierzinken (14) angeordnet sind.

4. Grubber nach Anspruch 3, **dadurch gekennzeichnet, dass** die stationären Nivellierzinken (14) über eine Winkelstütze (19) an einen hinteren Querträger (20) des Grundrahmens (1) befestigt sind.

5. Grubber nach einem der Ansprüche 1 bis 4, **dadurch gekennzeichnet, dass** die Nivellierzinken (14, 15) ein unteres winkelförmiges Nivellierteil (16) enthalten, das an einer Federplatte (17) befestigt ist.

6. Grubber nach einem der Ansprüche 1 bis 5, **dadurch gekennzeichnet, dass** das Fahrwerk (4) eine mittels eines ersten Druckmittelzylinders (9) anheb- und absenkbare Quertraverse (6) enthält.

7. Grubber nach Anspruch 6, **dadurch gekennzeichnet, dass** die Quertraverse (6) über zwei Längsträger (7) verschwenkbar an dem Grundrahmen (1) angeordnet ist.

8. Grubber nach Anspruch 6 oder 7, **dadurch gekennzeichnet, dass** die verschwenkbaren Nivellierzinken (15) über einen zweiten Druckmittelzylinders (21) zwischen der abgesenkten Nivellierstellung und der angehobenen Transportstellung bewegbar sind.

9. Grubber nach Anspruch 8, **dadurch gekennzeichnet, dass** der erste und zweite Druckmittelzylinder (9, 21) derart ansteuerbar sind, dass beim Anheben der Räder (5) die zunächst vor den Rädern (5) befindlichen verschwenkbaren Nivellierzinken (15) unter die Räder verschwenkt werden.

10. Grubber nach einem der Ansprüche 1 bis 9, **dadurch gekennzeichnet, dass** den Nivellierzinken (15) eine Packerwalzenanordnung mit einer vorderen Packerwalze (22) und einer hinteren Nachlaufwalze (23) nachgeordnet ist.

11. Grubber nach Anspruch 10, **dadurch gekennzeichnet, dass** die Packerwalze (22) mehrere voneinander beabstandete Ringe (27) enthält, zwischen die Scheiben (30) der Nachlaufwalze (23) eingreifen.

12. Grubber nach Anspruch 10 oder 11, **dadurch gekennzeichnet, dass** die Packerwalze (22) und die Nachlaufwalze (23) zwischen zwei an einem Tragrahmen (24) pendelnd gelagerten Lagerplatten (26) drehbar gelagert sind.

## Claims

1. Grubber with a base frame (1), a running gear assembly (4) arranged on the base frame (1) with two wheels (5) which can be moved between a lowered transport position and a raised working position, a plurality of grubber tines (10) arranged next to one another on the base frame (1) and a plurality of levelling tines (14, 15) arranged following the grubber tines (10), **characterised in that** the levelling tines (15) arranged in the area of the wheels (5) can be pivoted between a lowered levelling position underneath the wheels (5) raised in the working position and a raised transport position in front of the lowered wheels (5).

2. Grubber according to claim 1, **characterised in that** the levelling tines (15) pivotable between a lowered levelling position and a raised transport position are arranged by means of an angled support (19) on a pivotable transverse shaft (20).

3. Grubber according to claim 1 or 2, **characterised in that** stationary levelling tines (14) are arranged between the pivotable levelling tines (15) level with the wheels (5).

4. Grubber according to claim 3, **characterised in that** the stationary levelling tines (14) are fastened by means of an angled support (19) to a rear crossmember (20) of the base frame (1).

5. Grubber according to one of claims 1 to 4, **characterised in that** the levelling tines (14, 15) contain a lower angular levelling part (16) which is fastened to a spring plate (17).

6. Grubber according to one of claims 1 to 5, **characterised in that** the running gear assembly (4) comprises a crossmember (6) which can be raised and lowered by means of a first pressure medium cylinder (9).

7. Grubber according to claim 6, **characterised in that** the crossmember (6) is arranged pivotable on the base frame (1) by means of two longitudinal members (7).

8. Grubber according to claim 6 or 7, **characterised in that** the pivotable levelling tines (15) can be moved by means of a second pressure medium cylinder (21) between the lowered levelling position and the raised transport position.

9. Grubber according to claim 8, **characterised in that** the first and second pressure medium cylinders (9, 21) can be actuated in such a way that when the wheels (5) are raised, the pivotable levelling tines (15) initially located in front of the wheels (5) are swivelled under the wheels.

10. Grubber according to one of claims 1 to 9, **characterised in that** the levelling tines (15) are followed by a consolidating roller arrangement with a front consolidating roller (22) and a rear trailing roller (23).

11. Grubber according to claim 10, **characterised in that** the consolidating roller (22) comprises a plurality of mutually spaced rings (27) between which discs (30) of the trailing roller (23) engage.

12. Grubber according to claim 10 or 11, **characterised in that** the consolidating roller (22) and the trailing roller (23) are mounted pivotably between two bearing plates (26) which are mounted so that they float on a carrying frame (24).

## Revendications

1. Cultivateur avec un cadre de base (1), un mécanisme de roulement (4) disposé sur le cadre de base (1) doté de deux roues (5) mobiles entre une position de transport abaissée et une position de travail relevée, plusieurs dents de cultivateur (10) disposées les unes à côté des autres sur le cadre de base (1) et plusieurs dents de nivellement (14, 15) disposées en aval des dents de cultivateur (10), **caractérisé en ce que** les dents de nivellement (15) disposées dans la zone des roues (5) peuvent être pivotées entre une position de nivellement abaissée au-dessous des roues (5) relevées dans la position de travail et une position de transport relevée devant les roues abaissées (5).

2. Cultivateur selon la revendication 1, **caractérisé en ce que** les dents de nivellement (15) pouvant être pivotées entre une position de nivellement abaissée et une position de transport relevée sont disposées par le biais d'une équerre de support (19) sur un axe transversal (20) rotatif.

3. Cultivateur selon la revendication 1 ou 2, **caractérisé en ce que** des dents de nivellement (14) stationnaires sont disposées entre les dents de nivellement (15) pouvant être pivotées à la hauteur des roues (5).

4. Cultivateur selon la revendication 3, **caractérisé en ce que** les dents de nivellement stationnaires (14) sont fixées par le biais d'une équerre de support (19) sur une traverse arrière (20) du cadre de base (1).

5. Cultivateur selon l'une quelconque des revendications 1 à 4, **caractérisé en ce que** les dents de nivellement (14, 15) contiennent une partie de nivellement (16) inférieure angulaire qui est fixée à une plaque à ressort (17).

6. Cultivateur selon l'une quelconque des revendications 1 à 5, **caractérisé en ce que** le mécanisme de roulement (4) contient une traverse (6) pouvant être levée et abaissée à l'aide d'un premier vérin hydraulique (9).

7. Cultivateur selon la revendication 6, **caractérisé en ce que** la traverse (6) est disposée de manière à pouvoir pivoter via deux longerons (7) sur le cadre de base (1).

8. Cultivateur selon la revendication 6 ou 7, **caractérisé en ce que** les dents de nivellement (15) pouvant être pivotées sont mobiles par le biais d'un second vérin hydraulique (21) entre la position de nivellement abaissée et la position de transport relevée.

9. Cultivateur selon la revendication 8, **caractérisé en ce que** le premier et second vérins hydrauliques (9, 21) peuvent être commandés de telle manière que lors du levage des roues (5), les dents de nivellement (15) pouvant être pivotées se trouvant tout d'abord devant les roues (5) sont pivotées sous les roues.

10. Cultivateur selon l'une quelconque des revendications 1 à 9, **caractérisé en ce qu'**un ensemble de rouleaux tasseurs avec un rouleau tasseur avant (22) et un rouleau de poursuite arrière (23) est disposé en aval des dents de nivellement (15).

11. Cultivateur selon la revendication 10, **caractérisé en ce que** le rouleau tasseur (22) contient plusieurs anneaux (27) espacés les uns des autres, entre lesquels des disques (30) du rouleau de poursuite (23) s'engagent.

12. Cultivateur selon la revendication 10 ou 11, **caractérisé en ce que** le rouleau tasseur (22) et le rouleau de poursuite (23) sont logés de manière à tourner entre deux plaques d'appui (26) logées de manière oscillante sur un cadre porteur (24).
